# EUROPEAN PATENT SPECIFICATION

(11) **EP 2 048 914 B1**
(45) Date of publication and mention of the grant of the patent: **02.10.2013**
(21) Application number: 07118254.7
(22) Date of filing: 10.10.2007
(51) Int. Cl.: H05B 6/36, H05B 6/12

(54) **A cooking device having an induction heating element**
Kochvorrichtung mit Induktionserhitzungselement
Dispositif de cuisson doté d'un élément de chauffage par induction

(43) Date of publication of application: 15.04.2009
(73) Proprietor: LG Electronics Inc., Yeongdeungpo-gu Seoul 150-721 (KR)
(72) Inventor: Oh, Doo Yong, Seoul 152-848 (KR); Ryu, Seung Hee, Gyeonggi-do (KR); Park, Byeong Wook, Gyeonggi-do (KR)
(74) Representative: Cabinet Plasseraud

(56) References cited:
- FR-A- 2 657 486
- GB-A- 2 199 720
- US-A1- 2005 242 085

## Description

### BACKGROUND

### 1. Field

The present disclosure relates to a cooktop having an induction heating element.

### 2. Background

A stovetop or a cooktop cooker may be a home appliance having heating elements designed for the purpose of heating items such as food or liquid, and the cooker heats the item by using heat sources such as gas and electricity. An electric cooker using electricity includes a heating member. The heating member may include an induction heating heater or element that cooks food by using heat generated from an eddy current loss and a hysteresis loss which are generated as an alternating magnetic field is applied to a cooking container.
FR 2 657 486 discloses an induction heater comprising two annular planar coils which are disposed concentrically, and bars which lay under the coils for preventing a magnetic field generated by the planar coils from propagating under the coils.
GB 2 199 170 discloses an induction heater comprising several coils, one being isolated from the other by a ferrite bar, and the coils being arranged such that adjacent coils are traversed by currents which are opposite in sense, so as to reduce the harmonic emission which may interfere with radio reception.
US 2005/0242085 discloses an induction heater comprising an induction coil, a plurality of ferrite legs, and a luminous device intended to indicate a heating range of the heater.
US 5 954 984 discloses a heat retentive, temperature self-regulating, food retaining apparatus that includes a body, heat retentive core and magnetic induction heating element.

### SUMMARY OF THE INVENTION

According to the invention, an induction heater is defined in Claim 1.

### BRIEF DESCRIPTION OF THE DRAWINGS

The embodiments will be described in detail with reference to the following drawings in which like reference numerals may refer to like elements wherein:

Figure 1 is an exploded perspective view showing a cooker such as a cooktop or stovetop according to a first embodiment.

Figure 2 is a detailed plan view of die induction heating element and/or induction heater according to die first embodiment illustrated in Figure 1.

Figure 3 is a detailed plan view of the induction heating element and/or induction heater according to a second embodiment.

Figure 4 is a detailed plan view of the induction heating element and/or induction heater according to a third embodiment.

Figure 5 is a detailed plan view of the induction heating element and/or induction heater according to a fourth embodiment.

Figure 6 is detailed a plan view showing an arrangement of the ferromagnetic or ferrimagnetic material of the induction heating element and/or induction heater.

Figure 7 is a detailed plan view showing an arrangement of the ferromagnetic or ferrimagnetic material of the induction heating element and/or induction heater.

### DETAILED DESCRIPTION

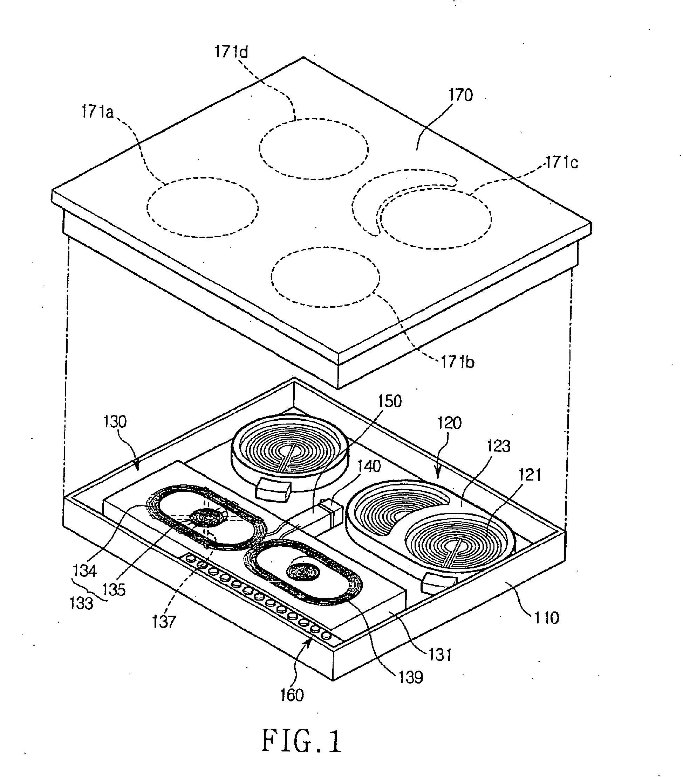

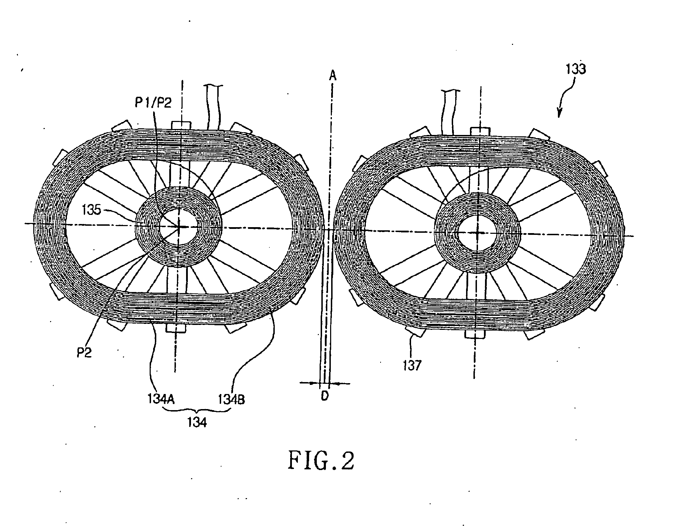

Figure 1 shows a cooker e.g., a stovetop or cooktop, and Figure 2 shows a detail plan view of the induction heating element and/or induction heater the first embodiment. The cooker may make up the top of the stove or may be built into a countertop. Further, a gas burner may be used instead of an electric heater.

Referring to Figures 1 and 2, a cooker includes a case 110, an electric heater 120, an induction heater 130, a power supply unit 140, an inverter 150, a control unit 160 and an upper plate 170. Various parts, such as the electric heater 120 and the induction heating heater 130, may be installed in the case 110. The case 110 may be insulated to prevent the heat of the electric heater 120 and/or the induction heater 130 from escaping.

The electric heater 120 may be provided in an inner rear end of the case 110. Since heat is generated by resistance heat of the electric heater 120, it is possible to cook food using a cooking container or vessel made of a non-metal or non-magnetic material, for example, a cooking container made of a ceramic material or a glass material. The electric heater 120 may include a heating member 121 to generate heat through electricity, and an insulator 123. The insulator 123 serves to prevent heat of the heating member 121 from transferring into the case 110. A spring for damping impact is provided between a bottom of the case 110 and a lower surface of the insulator 123. Alternatively, a gas burner may be used rather than the electric heater.

In induction cooking, heat is generated in two ways. In magnetic hysteresis, the rapidly oscillating magnetic field created via inductor coil when AC power is applied causes power in the magnetic field to be converted to heat in the magnet base of the cooking vessel due to hysteresis. The amount of heat produced is proportional to the area of the hysteresis loop. This source of heat may be typical 7% or less, and gives thereof a small amount of heat.

The primary source of heat is the current produced by the electric field (known as eddy current). The current has it greatest value in the base of the cooking vessel, and gradually decrease with a rate dependent on frequency and material properties (relative permeability and election conduction). When the current amplitude has decreased e⁻¹ or 37% of its start value, its distance is called the skin depth. If the skin depth is one further of the thickness of the base of the cooking vessel, almost all eddy current has transformed to heat (e.g., 97%). The heat from the cooking vessel is transferred to the food by conduction, but very little heat is transferred to the actual cooktop.

The induction heater 130 includes a coil base 131, an inductor coil 133, a plurality of solids 137 of ferromagnetic or ferrimagnetic material and a mica sheet 139. The ferromagnetic material may be ferrites or alpha iron (a-Fe). The ferrimagnetic material may be YIG (yttrium iron garnet) and ferrites composed of iron oxide and other elements such as aluminum, cobalt, nickel, manganese and zinc.

The inductor coil 133, the solids 137 and the mica sheet 139 are located on the coil base 131. It may be provided in an inner front end of the case 110. The inductor coil 133 is installed on the coil base 131, and the inductor coil generates the alternating or oscillating magnetic field. The inductor coil 133 includes an outer coil 134 and an inner coil 135, as shown in Figure 2. The outer coil 134 in the first embodiment may be formed as a closed curve having two (2) straight portions 134A and two (2) curved portions 134B, and coils are wound for several times. The straight portions 134A may extend parallel to each other. The curved portions 134B may be formed as a semicircle having the same diameter, and both ends of the curved portions 134B may be connected to both ends of the straight portions 134A.

The outer coil 134 may be symmetrical around a symmetric point P1. The outer coil 134 may be symmetrically arranged around a symmetric axis extending perpendicular to the straight portions 134A between the adjacent curved portions 134B. The outer coils 134 may be adjacently arranged in order to sufficiently transfer the alternating or oscillating magnetic field to a space between the inductor coils 133. This allows the cooking container in excess of the range of inductor coil 133, e.g., a portion corresponding to the space between the inductor coils 133 of the cooking container positioned along the adjacent inductor coils 133 to be heated by the alternating or oscillating magnetic field.

According to this embodiment, any one of the respective curved portions 134B of the outer coil 134 may be arranged adjacently to the symmetric axis A. The outer coil 134 may be positioned so that any one of the respective curved portions 134B is spaced apart at a specific interval, e.g., distance D. The distance D may be 1 mm ~ 3 mm.

An inner coil 135 may be disposed inside of the outer coil 134. The inner coil 135 may be formed by winding the wire several times in a shape of circle having a center P2 which may coincide with the symmetric point P1 of the outer coil 134. The coil constituting the inner coil 135 may be wound in the same direction as the outer coil 134. This may prevent the alternating or oscillating magnetic field formed in the inner coil 135 from being opposite to the alternating or oscillating magnetic field formed in the outer coil 134. The inner coil 135 may be substantially disposed with the outer coil 134.

The solid 137 of ferromagnetic or ferrimagnetic may serve to diffuse the alternating or oscillating magnetic field generated in the inductor coil 133. A solid 137 may radially extended from the center point of the outer coil 134. An end of the solid 137 may extend beyond the outer periphery of the outer coil 134. The solid 137 may be disposed between the coil base 131 and the inductor coil 133. The alternating or oscillating magnetic field is sufficiently transferred into a space between adjacent inductor coils 133 by the outer coils 134 and the solid 137 which are adjacently arranged.

The mica sheet 139 may be provided between the inductor coil 133 and the solid 137. The mica sheet 139 may prevent heat generated by the cooking vessel seated on top of the upper plate 170 based on the oscillating magnetic field by the induction coil 133 from transferring to the solid 137.

The power supply unit 140 and the inverter 150 supply the AC power source having a predetermined frequency to the inductor coil 133, e.g., the outer coil 134 and the inner coil 135. A controller 160 may be used to control the operation of the cooker. The controller 160 may be provided in the inner front end of the case 110 and adjacently arranged to the induction heater 130.

The upper plate 170 may be connected to the upper portion of the case 110, thereby substantially closing the inside of the case 110. The cooking container or vessel is seated on a top of the upper plate 170, the heat generated in the electric and induction heating heaters 120, 130 is transferred to the cooking container via the upper plate 170. On the upper plate 170, a plurality of markings or identification 171a-171d corresponding to the electric and induction heating heaters 120, 130 is provided to align the cooking container.

A user may place the cooking container on the induction heating heater 130 using the seat portion 171a of the upper plate 170. If the cooking container is relatively bigger than the inductor coil 133, the cooking container is seated along the seat portions 171a and 171b corresponding to the adjacent inductor coils 133.

If the user inputs the operation signal by operating the control unit 160, the power source supplied from the power supply unit 140 by the inverter 150 is supplied to the inductor coil 133 as an AC power source having a predetermined frequency. The cooking container is heated by the resistance heat due to eddy current and by the heat due to hysteresis loss, as the alternating or oscillating magnetic field generated in the inductor coil 133, e.g., the outer and inner coils 134, 135, and the heat is transferred to the item to be heated.

The outer coils 134 are adjacently arranged to each other, and the alternating magnetic field generated in the outer and inner coils 134, 135 is extended to the space between the induction heating heaters 130 by the solids 137. The cooking container, seated on the top of the upper plate 170 corresponding to the space between the induction heaters 130, is also heated, and thus, the food may be more efficiently cooked.

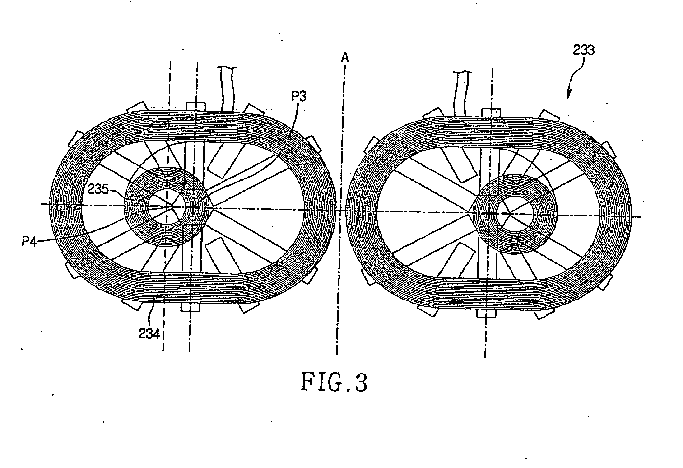

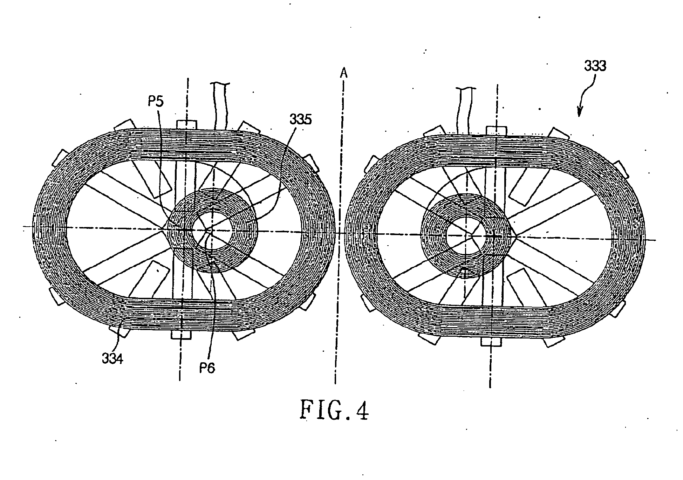

Figure 3 shows an induction heater according to a second embodiment, and Figure 4 shows an induction heater according to a third embodiment. As shown in Figures 3 and 4, the inductor coils 233, 333 may include outer coils 234, 334 and inner coils 235, 335. Circle centers P4, P6 of the inner coils 235, 335 may be disposed inside of the outer coils 234, 334 and they may be spaced apart from the symmetric points P3, P5 at a predetermined interval.

In the second embodiment, the circle center P4 of the inner coil 235 may be eccentric or offset to the symmetric point P3 of the outer coil 234 in an opposite direction to the symmetric axis A of the adjacent outer coils 234. In the third embodiment, the circle center P6 of the inner coil 335 may be eccentric or offset to the symmetric point P5 of the outer coil 334 in a direction toward the symmetric axis A of the adjacent outer coils 334.

In the second embodiment, the relatively increased alternating or oscillating magnetic field may be generated in the area of the inductor coil 233, which is spaced apart from the symmetric axis A. The food may be more efficiently cooked by using the relatively small cooking container, e.g., the cooking container corresponding to the size of the inductor coil 233. In the third embodiment, the relatively increased alternating or oscillating magnetic field may be generated in the area between adjacent the inductor coil 333, which is adjacently arranged to the other inductor coil, e.g., the area which is adjacently arranged to the symmetric axis A. The food or item to be heated is more efficiently cooked or heated by using the relatively large cooking container, e.g., the cooking container more than the size of the inductor coil 333.

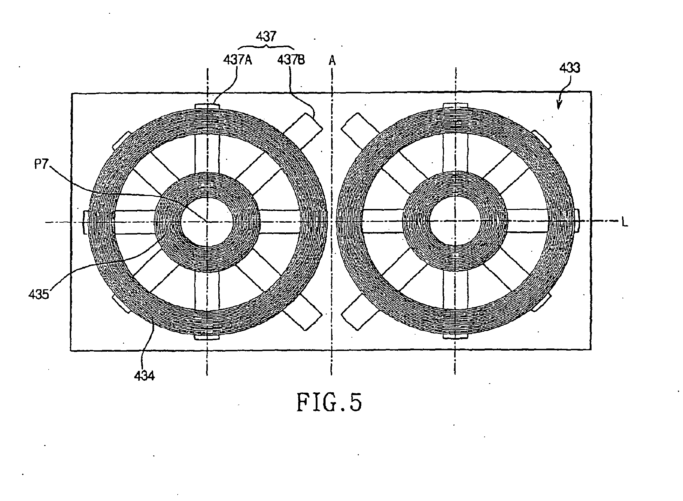

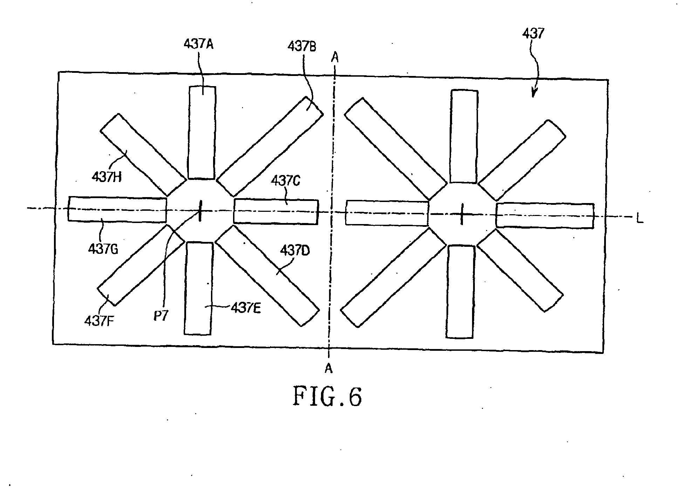

Figure 5 shows an induction heater according to a fourth embodiment which is not covered by the claims, and Figure 6 shows a solid of ferrimagnetic or ferromagnetic material according to the fourth embodiment. An outer coil 434 and an inner coil 435 of an inductor coil 433 may be formed in an circular shape having the same circular center as the center point P7 of the same inductor coil 433. The inner coil 435 may be substantially disposed within of the outer coil 434, since the diameter of the outer coil 434 is relatively greater than that of the inner coil 435.

Referring to Figure 6, according to this embodiment, the solids of ferrimagnetic or ferromagnetic material 437 for magnifying the alternating or oscillating magnetic field of the inductor coil 433 may include a radial portions 437A, 437E-437H, shorter portion 437C and an extended portions 437B, 437D. The plurality of portions 437A-437H radially extended from the center point P7 so that they may be spaced apart at a predetermined central angle. The radial portions 437A, 437E-437H may extend until the portions cross the outer coil 434, and an end of each radial portion 437A, 437E-437H may extend beyond an outer periphery of the outer coil 434. The extended portions 437B, 437D may extend further than the radial portions 437A, 437E-437H, and may extend further than the outer coil 434 in a radial direction. The radial portion 437C disposed on the line L and provided to adjacent inductor coil 433, may be shorter than portions 437A, 437E-437H.

The alternating or oscillating magnetic field is diffused into a space between the adjacent inductor coils 433, where the alternating or oscillating magnetic field of the inductor coil 433 is not easily transferred, via the extended portions 437B, 437D. Therefore, the food may be more efficiently cooked by using the relatively large cooking container which is out of the range of the inductor coil 433.

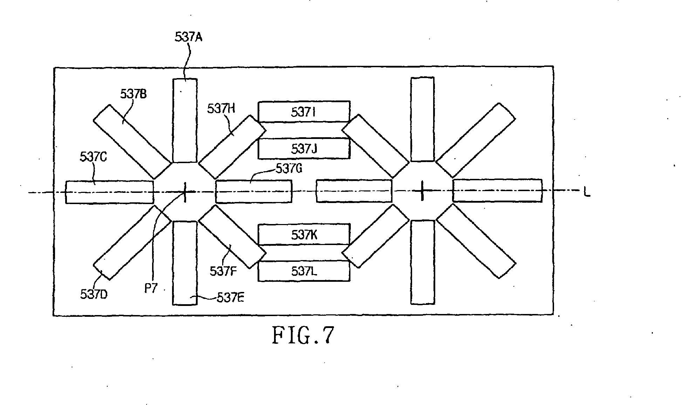

Figure 7 shows an arrangement of the portions of ferromagnetic or ferrimagnetic material in accordance with another embodiment. A plurality of radial portions 537A-537H and a plurality of bridge portions 537I-537L may be provided. The radial portions 537A-537H may radially extend from the center point P7 so that they are spaced apart at a predetermined central angle. The bridge portions 537I-537L may connect with ends of the radial portions 537F, 537H, which are radially extended to the space between the adjacent inductor coils, to each other. The radial portions 537F-537H may be shorter than radial portions 537A-537E. The bridge portions 537I-537L may be disposed parallel to a line, which align with center points P7 of the adjacent inductor heaters.

The alternating or oscillating magnetic field may be more efficiently transferred into the space between the inductor coils by the bridge portions 537I-537L. The food in the relatively large cooking container which is greater than the inductor coil may be more efficiently cooked, since the alternating magnetic field is more efficiently transferred into the space between the inductor coils by the bridge portions 537I-537L.

The inductor coils may be adjacently arranged to each other so that they are space apart at a minimum distance D. The alternating or oscillating magnetic field is diffused into the space between the inductor coils by solids(s) or portions(s). Food or items to be heated may be more efficiently cooked or heated by using a relatively large cooking container which is out of the range of the inductor coil, i.e. the cooking container, disposed along the adjacent inductor coils. The alternating magnetic field may be diffused into the area, where the adjacent inductor coils are spaced apart, by extended portions. it may be possible to cook food or items more efficiently using a relatively small cooking container corresponding to the range of the inductor coil.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

A cooker embodiment may include: a coil base; a plurality of inductor coils generating an alternating current magnetic field and provided on the coil base; and a plurality of ferrites to transfer the alternating current magnetic field of the inductor coils and provided on the coil base, wherein in a space between the inductor coils, the inductor coils are adjacently arranged to each other or the alternating current magnetic field is transferred by the ferrites. The inductor coils are respectively formed as a plane curve, which are adjacently arranged to each other. At least some of the ferrites is extended into a space between the inductor coils.

A cooker embodiment may include: a coil base; a plurality of inductor coils, which are provided with outer coils adjacently arranged to each other and inner coils disposed inside of the respective outer coils, generating an alternating current magnetic field and provided on the coil base; and a plurality of ferrites transferring the alternating current magnetic field of the inductor coils and provided on the coil base in an overlapped manner with the inductor coils, wherein in a space between the inductor coils, the outer coils are adjacently arranged to each other or the alternating current magnetic field is transferred by the ferrites. The inner coil is disposed inside of the outer coil so that it is adjacently arranged to the other outer coils. The inner coil is disposed inside of the outer coil so that they are spaced apart from the other outer coil. Some of the ferrites is extended outside of the outer coils and provided in the space between the inductor coils.

A cooker embodiment may include a coil base; a plurality of inductor coils generating an alternating current magnetic field and formed as a plane curve having at least one long side and short side and provided on the coil base in an adjacently located relationship to each other; and a plurality of ferrites transferring the alternating current magnetic field of the inductor coils and provided on the coil base. The inductor coils are spaced apart in a range of 1 mm ∼ 3 mm in order to insulate therebetween. The inductor coils are formed as a closed curve having 2 straight portions and 2 curved portions which connect both ends of the straight portions to each other.

A cooker embodiment may include a coil base; a plurality of inductor coils which are provided with outer coils provided on the coil base, and with inner coils provided on the coil base corresponding to an inside of the outer coils; and a plurality of ferrites transferring an alternating current magnetic field of the inductor coils and provided on the coil base, wherein the inductor coils are provided on the coil base such that the respective outer coils are adjacently arranged to each other. The outer coils are formed as a closed curve having 2 straight portions and 2 curved portions which connect both ends of the straight portions to each other. The outer coils are respectively formed as a closed curve having a symmetric center, and the inner coils are formed as a circle shape having the same circle center as a center point of the outer coil. The outer coils are respectively formed as a closed curve having a symmetric center, wherein the outer coils, which are adjacently arranged to each other, are provided on the coil base symmetrically about a straight line between the outer coils, and wherein the inner coils are respectively disposed inside of the outer coils such that they have a circle center spaced apart from the symmetric point of the outer coils.

A cooker may include a coil base; a plurality of inductor coils generating an alternating current magnetic field and provided on the coil base in an adjacently located relationship to each other; and a plurality of ferrites transferring the alternating current magnetic field of the inductor coils to a space between the adjacent inductor coils. The ferrite is a radial ferrite of which a plurality of ferrites are radially extended from the center point, and wherein the some of the radial ferrite which is extended into a space between the adjacent inductor coils is an extended ferrite which is further extended out of the inductor coils.

A cooker embodiment may include a coil base; a plurality of inductor coils generating an alternating current magnetic field and provided on the coil base in an adjacently located relationship to each other; and a ferrite, which is provided with a plurality of radial ferrites extending to a space between the adjacent inductor coils and at least one bridge ferrite connecting some of the radial ferrites radially extending to a space between the adjacent inductor coils, transferring the alternating current magnetic field of the inductor coils to a space between the adjacent inductor coils and provided on the coil base. The inductor coils comprise an outer coil provided on the coil base; and an inner coil provided on the coil base corresponding to the inside of the outer coil.

Although embodiments have been described with reference to a number of illustrative embodiments thereof, it should be understood that numerous other modifications and embodiments can be devised by those skilled in the art that will fall within the scope of the invention, as defined by the appended claims. In addition to variations and modifications in the component parts and/or arrangements, alternative uses will also be apparent to those skilled in the art. Further, the teaching of the induction heater or induction heating element may be applicable to other areas other than home appliances. Further, the entire cooktop may comprise induction heaters without electric heaters or gas burners. Many configurations for different heaters are possible. Further, the solids or portions of ferromagnetic or ferromagnetic material may have shapes other than a rectangle or polygonal shape.

## Claims

1. An induction heater comprising:
a base (131);
a plurality of first solids of ferromagnetic or ferrimagnetic material (137, 437),
the solids having a prescribed shape and being provided to have a prescribed arrangement on the base (131); **characterized in that** the induction heater further comprises:
a plurality of inductor coils (133, 233, 333) provided over at least portions of the plurality of solids, each inductor coil (133, 233, 333) including a first coil (134, 234, 334, 434) having a plurality of wire windings, and a second coil (135, 235, 335) provided in an inner side of the first coil and spaced apart from the first coil,
wherein each first coil of a given inductor coil of the plurality includes two straight portions extending parallel to each other, and curved portions which connect both ends of the straight portions to each other, the first coils, respectively, formed as a closed curve having a symmetric center,
wherein the first coils, which are adjacently arranged in order to sufficiently transfer an alternating or oscillating magnetic field to a space between the curved portions, are provided on the base symmetrically about a straight line between the first coils, and wherein the second coils are respectively disposed inside of the first coils such that they have a circle center spaced apart from the symmetric point of the second coil.

2. The induction heater of claim 1, wherein the plurality of solids (137) have a rectangular shape, and are arranged to radially extend outward the first coil (134, 234, 334), and cross the first coil.

3. The inductor heater of claim 2, wherein each end of the plurality of solids extends beyond the outer periphery of the first coil.

4. The inductor heater of claim 1, wherein a prescribed number of solids are at least one of longer or shorter than others.

5. The inductor heater of claim 3, wherein from a middle reference point (P1, P2) of the first coil, the first coil and the plurality of first solids have symmetry.

6. The inductor heater of claim 1, wherein the second coil has a circular shape, and the first coil has an oval shape.

7. The inductor heater of claim 7, wherein a middle reference point (P4, P6) of the second coil is offset from a middle reference point (P3, P5) of the first coil.

8. The inductor heater of claim 1, further comprising a plurality of second solids of ferromagnetic or ferrimagnetic material, the second solids being formed parallel to each other, and contacting at least one of the first solids.

9. The inductor heater of claim 1, 2, 3, 4, 5 or 9, wherein the first coil includes two straight portions (134A) and two curved portions (134B), and the straight portions may extend parallel to each other.

## Patentansprüche

1. Induktionserhitzungsvorrichtung, die aufweist:
einen Sockel (131);
mehrere erste Festkörper aus ferromagnetischem oder ferrimagnetischem Material (137, 437), wobei die Festkörper eine vorgeschriebene Form haben und derart bereitgestellt sind, dass sie eine vorgeschriebene Anordnung auf dem Sockel (131) haben; **dadurch gekennzeichnet, dass** die Induktionserhitzungsvorrichtung ferner aufweist:
mehrere Induktionsspulen (133, 233, 333), die wenigstens über Abschnitten der mehreren Festkörper bereitgestellt sind, wobei jede Induktionsspule (133, 233, 333) eine erste Spule (134, 234, 334, 434) mit mehreren Drahtwicklungen und eine zweite Spule (135, 235, 335), die in einer Innenseite der ersten Spule bereitgestellt ist und von der ersten Spule beabstandet ist, umfasst,
wobei jede erste Spule einer gegebenen der mehreren Induktionsspulen zwei gerade Abschnitte, die sich parallel zueinander erstrecken, und gekrümmte Abschnitte, die beide Enden der geraden Abschnitte miteinander verbinden, umfasst, wobei die ersten Spulen jeweils als eine geschlossene Krümmung mit einer symmetrischen Mitte ausgebildet sind,
wobei die ersten Spulen, die benachbart zueinander angeordnet sind, um ein wechselndes oder oszillierendes Magnetfeld ausreichend an einen Raum zwischen den gekrümmten Abschnitten zu übertragen, symmetrisch um eine gerade Linie zwischen den ersten Spulen auf dem Sockel bereitgestellt sind und wobei die zweiten Spulen jeweils im Inneren der ersten Spulen angeordnet sind, so dass sie eine Kreismitte haben, die von dem Symmetriepunkt der zweiten Spule beabstandet ist.

2. Induktionserhitzungsvorrichtung nach Anspruch 1, wobei die mehreren Festkörper (137) eine rechteckige Form haben und derart angeordnet sind, dass sie sich radial auswärts von der ersten Spule (134, 234, 334) erstrecken und die erste Spule kreuzen.

3. Induktionserhitzungsvorrichtung nach Anspruch 2, wobei jedes Ende der mehreren Festkörper sich über den Außenumfang der ersten Spule hinaus erstreckt.

4. Induktionserhitzungsvorrichtung nach Anspruch 1, wobei eine vorgeschriebene Anzahl von Festkörpern wenigstens länger oder kürzer als andere ist.

5. Induktionserhitzungsvorrichtung nach Anspruch 3, wobei ein mittlerer Bezugspunkt (P1, P2) der ersten Spule, die erste Spule und die mehreren Festkörper eine Symmetrie aufweisen.

6. Induktionserhitzungsvorrichtung nach Anspruch 1, wobei die zweite Spule eine kreisförmige Form hat und die erste Spule eine ovale Form hat.

7. Induktionserhitzungsvorrichtung nach Anspruch 1, wobei ein mittlerer Bezugspunkt (P4, P6) der zweiten Spule von einem mittleren Referenzpunkt (P3, P5) der ersten Spule versetzt ist.

8. Induktionserhitzungsvorrichtung nach Anspruch 1, die ferner mehrere zweite Festkörper aus ferromagnetischem oder ferrimagnetischem Material aufweist, wobei die zweiten Festkörper parallel zueinander ausgebildet sind und wenigstens einen der ersten Festkörper berühren.

9. Induktionserhitzungsvorrichtung nach Anspruch 1, 2, 3, 4, 5 oder 9, wobei die erste Spule zwei gerade Abschnitte (134A) und zwei gekrümmte Abschnitte (134B) umfasst, und die geraden Abschnitte sich parallel zueinander erstrecken können.

## Revendications

1. Dispositif chauffant à induction, comprenant :
une base (131);
une pluralité de premiers solides de matériau ferromagnétique ou
ferrimagnétique (137, 437), les solides présentant une forme prescrite et étant prévus pour présenter un agencement prescrit sur la base (131) ; **caractérisé en ce que** le dispositif chauffant à induction comprend en outre :
une pluralité de bobines d'induction (133, 233, 333) prévues sur au moins des parties de la pluralité de solides, chaque bobine d'induction (133, 233, 333) comprenant une première bobine (134, 234, 334, 434) possédant une pluralité d'enroulements de fil métallique, et une seconde bobine (135, 235, 335) prévue dans un côté intérieur de la première bobine et espacée de la première bobine,
dans lequel chaque première bobine d'une bobine d'induction donnée parmi la pluralité comprend deux parties droites s'étendant parallèlement l'une à l'autre, et
des parties incurvées qui connectent les deux extrémités des parties droites l'une à l'autre, les premières bobines, respectivement, présentant une forme de courbe fermée possédant un centre symétrique,
dans lequel les premières bobines, qui sont agencées de façon adjacente afin de transférer suffisamment un champ magnétique alternatif ou oscillant à un espace entre les parties incurvées, sont prévues sur la base symétriquement autour d'une ligne droite entre les premières bobines, et dans lequel
les secondes bobines sont respectivement disposées à l'intérieur des premières bobines de sorte qu'elles comportent un centre de cercle espacé du point symétrique de la seconde bobine.

2. Dispositif chauffant à induction selon la revendication 1, dans lequel les solides de la pluralité de solides (137) présentent une forme rectangulaire, et sont agencés pour s'étendre radialement vers l'extérieur de la première bobine (134, 234, 334), et traversent la première bobine.

3. Dispositif chauffant à induction selon la revendication 2, dans lequel chaque extrémité de la pluralité de solides s'étend au-delà de la périphérie extérieure de la première bobine.

4. Dispositif chauffant à induction selon la revendication 1, dans lequel un nombre prescrit de solides sont au moins plus longs ou plus courts que d'autres.

5. Dispositif chauffant à induction selon la revendication 3, dans lequel, à partir d'un point de référence médian (P1, P2) de la première bobine, la première bobine et la pluralité de premiers solides possèdent une symétrie.

6. Dispositif chauffant à induction selon la revendication 1, dans lequel la seconde bobine présente une forme circulaire, et la première bobine présente une forme ovale.

7. Dispositif chauffant à induction selon la revendication 7, dans lequel un point de référence médian (P4, P6) de la seconde bobine est décalé par rapport à un point de référence médian (P3, P5) de la première bobine.

8. Dispositif chauffant à induction selon la revendication 1, comprenant en outre une pluralité de seconds solides de matériau ferromagnétique ou ferrimagnétique, les seconds solides étant formés parallèlement les uns aux autres, et entrant en contact avec au moins un des premiers solides.

9. Dispositif chauffant à induction selon la revendication 1, 2, 3, 4, 5 ou 9, dans lequel la première bobine comprend deux parties droites (134A) et deux parties incurvées (134B), et les parties droites peuvent s'étendre parallèlement l'une à l'autre.
